Europäisches Patentamt

European Patent Office

Office européen des brevets

(11) Veröffentlichungsnummer: **0 484 723 A2**

## (12) EUROPÄISCHE PATENTANMELDUNG

(21) Anmeldenummer: **91117952.1**

(22) Anmeldetag: **22.10.91**

(51) Int. Cl.5: **C08L 27/06**, //(C08L27/06, 25:08),(C08L27/06,33:20)

(30) Priorität: **08.11.90 DE 4035480**

(43) Veröffentlichungstag der Anmeldung: **13.05.92 Patentblatt 92/20**

(84) Benannte Vertragsstaaten:
**BE DE ES FR GB IT NL SE**

(71) Anmelder: **BASF Aktiengesellschaft**
**Carl-Bosch-Strasse 38**
**W-6700 Ludwigshafen(DE)**

(72) Erfinder: **Goertz, Hans-Helmut, Dr.**
**Am Wurmberg 11**
**W-6713 Freinsheim(DE)**
Erfinder: **Hatzmann, Guenter, Dr.**
**In der Taesch 23**
**W-6906 Leimen(DE)**
Erfinder: **Oschmann, Werner, Dr.**
**Buergermeister-Horlacher-Strasse 44**
**W-6700 Ludwigshafen(DE)**

(54) **Polyvinylchloridharzmassen.**

(57) Die Erfindung betrifft Polyvinylchloridharzmassen, enthaltend 0,1 bis 20 Gew.-%, bezogen auf die Menge des Polyvinylchlorids, eines Emulsionspolymerisats aus 40 bis 95 Gew.-% Styrol
4,5 bis 59,5 Gew.-% Acrylnitril
0,5 bis 30 Gew.-% eines $C_1$-$C_{18}$-Alkylacrylats und
0 bis 30 Gew.-% weiterer Comonomere.

EP 0 484 723 A2

Die Erfindung betrifft Polyvinylchloridharzmassen, enthaltend 0,1 bis 20 Gew.-%, bezogen auf die Menge des Polyvinylchlorids, eines Emulsionspolymerisats aus 40 bis 95 Gew.-% Styrol

4,5 bis 59,5 Gew.-% Acrylnitril

0,5 bis 30 Gew.-% eines $C_1$-$C_{18}$-Alkylacrylats und

0 bis 30 Gew.-% weiterer Comonomere.

Bei der Verarbeitung von Polyvinylchloridharzmassen zu Formteilen sind kurze Gelier- und Plastifizierzeiten der Harzmassen besonders wünschenswert, da die Verarbeitungstemperaturen nahe an der Zersetzungstemperatur des Polyvinylchlorids liegen.

Um die Gelierungs- und Plastifizierungszeiten von Polyvinylchloridharzmassen zu verkürzen, werden den Harzmassen Verarbeitungshilfsmittel zugesetzt.

Aus der EP-B-94604 ist der Zusatz von Styrol/Acrylnitril-Copolymeren zu Polyvinylchlorid als Verarbeitungshilfsmittel bekannt.

In der EP-A-103 733 sind Styrol/Acrylnitril-Copolymere, welche auch Alkylacrylate als Comonomere enthalten können, als Zusatzstoffe für geschäumtes, chloriertes Polyvinylchlorid genannt.

In der US-A-3 975 315 werden Copolymere des Styrols mit Acrylnitril oder Alkylalkacrylaten als Zusatzstoffe zur Verbesserung der Zellenstruktur von geschäumten Polyvinylchlorid empfohlen.

Durch die bisher eingesetzten Verarbeitungshilfsmittel konnten die Gelier- und und Plastifizierzeiten von Polyvinylhalogenidharzmassen noch nicht im erwünschten Ausmaß verkürzt werden. Aufgabe der vorliegenden Erfindung waren daher Polyvinylchloridharzmassen mit verkürzten Gelier- und Plastifizierzeiten. Demgemäß wurde die eingangs definierte Polyvinylchloridharzmasse gefunden.

Die Verarbeitbarkeit der erfindungsgemäßen Polyvinylchloridharzmassen ist erheblich verbessert. Die Gelier- und Plastifizierzeiten sind deutlich kürzer als bei Polyvinylchloridharzmassen nach dem Stand der Technik.

Die erfindungsgemäße Polyvinylchloridharzmasse enthält das Emulsionspolymerisat (im folgenden auch als Verarbeitungshilfsmittel bezeichnet) in einer Menge von 0,1 bis 20 Gew.-%, bevorzugt 0,5 bis 10 Gew.-%, bezogen auf die Menge des Polyvinylchlorids.

Bevorzugt enthält die Polyvinylchloridharzmasse kein Treibmittel und wird nicht für die Herstellung geschäumter Formteile verwendet.

Das Verarbeitungshilfsmittel wird durch Emulsionspolymerisation hergestellt und besteht aus 40 bis 95 Gew.-%, insbesondere 60 bis 90 Gew.-% Styrol,

4,5 bis 59,5 Gew.-%, insbesondere 9,5 bis 39,5 Gew.-% Acrylnitril,

0,5 bis 30 Gew.-%, insbesondere 0,5 bis 15 Gew.-% eines $C_1$-$C_{18}$-Alyklacrylats und

0 bis 30 Gew.-% weiterer Comonomere.

Bei den $C_1$-$C_{18}$-Alkylacrylaten sind die $C_1$- bis $C_8$-Alkylacrylate wie Methylacrylat, Ethylacrylat, n-Butylacrylat und 2-Ethylhexylacrylat bevorzugt.

Als weitere Comonomere kommen z.B. einfach ungesättigte vinyl- oder vinylidengruppentragende Verbindungen in Betracht. Insbesondere eignen sich $C_1$- bis $C_{18}$-Alkylmethacrylate, p-Methylstyrol, $\alpha$-Methylstyrol, Methacrylnitril, Vinylacetat und Vinylpropionat. Vorteilhaft ist, daß es sich bei allen verwendeten Monomeren um ausschließlich einfach ungesättigte Monomere handelt.

Die weiteren Comonomeren sind zum Erreichen kurzer Gelier- und Plastifizierzeiten nicht zwingend notwendig, haben sich aber in manchen Fällen als vorteilhaft erwiesen.

Das Emulsionspolymerisat kann einstufig oder mehrstufig aufgebaut sein.

Besonders vorteilhaft ist ein mehrstufiger Aufbau des Emulsionspolymerisats, bei dem der Anteil des Alkylacrylats in der äußeren Hülle relativ, d.h. bezogen auf das Gewicht der äußeren Hülle, größer ist als der Gesamtanteil des Alkylacrylats im Emulsionspolymerisat.

Durch einen solchen Aufbau können kurze Plastifizier- und Gelierzeiten schon bei sehr geringen Gewichtsanteilen des Alkylacrylats, z.B. von 0,5 bis 5 Gew.-% im Emulsionspolymerisat erhalten werden.

Bevorzugt ist ein mindestens zweistufiger Aufbau, insbesondere ein zweistufiger Aufbau, bei dem in der äußeren Hülle des Emulsionspolymerisats, deren Gewichtsanteil 5 bis 60 Gew.-%, insbesondere 10 bis 50 Gew.-% des Emulsionspolymerisats beträgt, mindestens 60 Gew.-%, insbesondere mindestens 80 Gew.-% der Gesamtmenge des $C_1$-$C_{18}$-Alkylacrylats enthalten sind.

Besonders bevorzugt ist das $C_1$-$C_{18}$-Alkylacrylat nur in der äußeren Hülle vorhanden.

Die Herstellung des Emulsionspolymerisats kann in an sich bekannter Weise erfolgen..

Als Emulgatoren können z.B. Alkalisalze von längerkettigen Fettsäuren, Alkylsulfate, Alkylsulfonate, alkylierte Arylsulfonate oder alkylierte Biphenylethersulfonate, Salze der Abietinsäure oder deren Derivate sowie Sulfobernsteinsäureester verwendet werden.

2

Geeignete Initiatoren sind z.B. Natrium-, Kalium- und Ammoniumpersulfat, tert.-Butylhydroperoxid, wasserlösliche Azoverbindungen sowie die Salze der 4,4'-Azobis[4-cyanopentansäure] oder 2,2'-Azobis[2-amidinopropanhydrochlorid]. Für die Polymerisation bei relativ niedriger Temperatur eignen sich insbesondere Redoxsysteme aus einem Persulfat oder einem Hydroperoxid sowie einem Reduktionsmittel in Verbindung mit einem Eisen(II)-Salz. Geeignete Reduktionsmittel sind beispielsweise Natrium-metabisulfit, Natriumhydroxymethansulfinat und Ascorbinsäure.

Die Emulsionspolymerisation wird vorzugsweise bei Temperaturen zwischen 30 und 95°C durchgeführt.

Durch die Polymerisationstemperatur wird im wesentlichen das Molekulargewicht des gebildeten Polymeren beeinflußt, d.h. je höher die Temperatur, desto niedriger das Molekulargewicht. Die Polymerisationstemperatur kann bei einem mehrstufigen Aufbau des Emulsionspolymerisats bei der Polymerisation der einzelnen Stufen gleich oder unterschiedlich sein. Zur Charakterisierung des Molekulargewichts dient in der Regel eine Viskositätsmessung. Eine gebräuchliche Größe ist der K-Wert nach Fikentscher (vgl. Cellulosechemie, Band 13, S. 48-64 und 71-74 (1932)). In 1 %iger Lösung (1 g Polymer in 100 ml Tetrahydrofuran) in Tetrahydrofuran liegt der K-Wert der beanspruchten Polymerisate, insbesondere über 75. Bevorzugt liegt er zwischen 90 und 160, besonders bevorzugt zwischen 100 und 140.

Bei einem mehrstufigen Aufbau werden die Monomeren der einzelnen Stufen weitgehend zeitlich nacheinander polymerisiert, d.h. die Monomeren der einzelnen Stufen werden bevorzugt zu mehr als 95 Gew.-%, insbesondere zu mehr als 99 Gew.-% auspolymerisiert, bevor mit der Zugabe der Monomeren einer weiteren Stufe begonnen wird.

Um restliche Mengen an Acrylnitril, welches noch in der Emulsion vorliegt, zu binden, können nach Abschluß der Polymerisation aller Stufen noch geringe Mengen anderer Monomere, insbesondere Methylmethacrylat oder Mischungen von Methylmethacrylat mit $C_1$-$C_8$-Alkylacrylaten, z.B. im Gewichtsverhältnis 50 : 50 bis 95 : 5, zugesetzt werden, so daß das Acrylnitril mit diesen Monomeren zusammen auspolymerisiert. Der Gewichtsanteil der zugesetzten Monomeren beträgt im allgemeinen weniger als 5 Gew.-%, bezogen auf das gesamte Emulsionspolymerisat.

Die Teilchengröße der Emulsionspolymerisate kann durch die Wahl der Polymerisationsbedingungen eingestellt werden, wie es z.B. in der DE-C 22 130 989 beschrieben ist. Die Teilchengröße hängt z.B. von der Emulgatormenge und/oder Rührergeschwindigkeit ab. Bevorzugt sind mittlere Teilchendurchmesser $d_{50}$ (Volumenmittel) im Bereich von 50 bis 300 nm, bevorzugt 80 bis 250 nm.

Der Feststoffgehalt der Emulsionen beträgt bevorzugt 30 bis 60 Gew.-%, vorzugsweise 35 bis 50 Gew.-%. Das Polymerisat kann aus der Emulsion durch Fällung und anschließende Trocknung oder in einem Verfahrensschritt durch Sprühtrocknung als weitgehend wasserfreies Pulver isoliert werden.

Die Sprühtrocknung kann in bekannter Weise durchgeführt werden, wie es z.B. im "Spray drying handbook" (K. Mosters, New York 1985) beschrieben ist. Die Eintrittstemperatur des Trockengases in den Sprühturm liegt zweckmäßigerweise im Bereich von 100 bis 200°C, vorzugsweise 110 bis 180°C und die Temperatur des getrockneten Pulvers am Ausgang des Sprühturms beträgt bevorzugt 40 bis 100°C.

Man erhält rieselfähige Pulver, deren mittlerer Teilchendurchmesser im allgemeinen 50 bis 500 $\mu$m, insbesondere 100 bis 300 $\mu$m beträgt.

Polyvinylchlorid wird im technischen Maßstab durch Emulsions- und insbesondere durch Suspensionspolymerisation hergestellt. Unter Polyvinylchlorid sind hierbei Homopolymere des Vinylchlorids zu verstehen sowie Copolymere des Vinylchlorids mit bis zu 30 Gew.-% Comonomeren, wie insbesondere Vinylacetat und Vinylpropionat. Bevorzugt sind Homopolymere des Vinylchlorids. Bei den Vinylchloridhomo- oder -copolymeren handelt es sich nicht um nachchlorierte Polymere. Der Zusatz des Emulsionspolymerisats zum Polyvinylchlorid kann, gegebenenfalls zusammen mit weiteren Modifizierungshilfsmitteln, z.B. zur Verbesserung der Schlagzähigkeit, Wärmeformbeständigkeit und Witterungsbeständigkeit, mit Stabilisatoren, Gleitmitteln, Füllstoffen, Farbstoffen, Pigmente u.ä., vor der Verarbeitung der Harzmasse zu Formteilen oder Granulaten erfolgen. Zum Beispiel können die Bestandteile der Polyvinylchloridharzmasse mechanisch in Schnellmischern gemischt werden. Anschließend kann das Gemisch in bekannter Weise, z.B. durch Extrusion, Spritzgießen, Kalandrieren, Tiefziehen, Pressen, Blasformen u.ä. zu Granulaten oder Formteilen verarbeitet.

Das Verarbeitungshilfsmittel kann der Polyvinylchloridharzmasse auch während der Verarbeitung zu Formteilen oder Granulaten zugesetzt werden. Bei der Extrusion von Polyvinylchloridharzmassen kann z.B. das Verarbeitungshilfsmittel, gegebenenfalls zusammen mit weiteren Zusatzstoffen und dem Polyvinylchlorid dem Extruder kontinuierlich in cold feed oder hot feed Fahrweise zudosiert werden.

Die erfindungsgemäße PVC-Harzmasse ermöglicht eine schnellere und damit wirtschaftlichere Verarbeitung, wie die kurzen Gelier- und Plastifizierzeiten zeigen.

Beispiele

1. Herstellung einstufiger Emulsionspolymerisate

| Emulsionspolymerisat A: | |
|---|---|
| Vorlage: | 1000 g Wasser<br>3,2 g eines Natriumalkylsulfonats mit einer mittleren Kettenlänge von 15 C-Atomen<br>2 g Natriumpyrophosphat<br>2 g Natriumpersulfat |
| Zulauf 1: | 1440 g Wasser<br>27 g des Natriumalkylsulfonats mit einer mittleren Kettenlänge von 15 C-Atomen<br>1248 g Styrol<br>416 g Acrylnitril<br>416 g Ethylhexylacrylat |
| Zulauf 2: | 100 g Wasser<br>2 g Natriumpyrophosphat. |

Zur Vorlage wurden unter Rühren 180 ml der Zulaufmischung 1 gegeben und das Gemisch auf 75°C erwärmt. Bei dieser Temperatur wurde der Rest der Zulaufmischung 1 innerhalb von 4 h zudosiert. Zulaufmischung 2 wurde innerhalb von 2 h, beginnend 2 h nach Anfang der Zudosierung der Zulaufmischung 1 zugegeben.

Nach Zulaufende wurde noch 2 h nachgerührt und dann abgekühlt.

Die erhaltene Dispersion wies einen Feststoffgehalt von 44,7 Gew.-% und einen pH-Wert von 6,5 auf. Der K-Wert des Polymeren betrug 80.

Die einstufigen Emulsionspolymerisate B, C und zum Vergleich das einstufige Emulsionspolymerisat a wurden in entsprechender Weise hergestellt (Zusammensetzung s. Tabelle 1).

2. Herstellung der zweistufigen Emulsionspolymerisate

| Emulsionspolymerisat D: | |
|---|---|
| Vorlage: | 600 g Wasser<br>0,015 g Eisen(II)sulfat Heptahydrat<br>2 g eines Natriumalkylsulfonats mit einer mittleren Kettenlänge von 15 C-Atomen<br>1,53 g Natriumpersulfat<br>114,8 g Styrol<br>32,8 g Acrylnitril |
| Zulauf 1: | 1600 g Wasser<br>18 g des Natriumalkylsulfonats mit einer mittleren Kettenlänge von 15 C-Atomen<br>1033 g Styrol<br>344 g Acrylnitril |
| Zulauf 2: | 340 g Wasser<br>1,7 g Natriummetabisulfit |
| Zulauf 3: | 15 g Wasser<br>0,17 g Natriumpersulfat |
| Zulauf 4: | 102 g Styrol<br>34 g Acrylnitril<br>34 g Butylacrylat. |

Die Vorlage wurde unter Rühren auf 70°C aufgeheizt. Nach Erreichen der Temperatur wurde Zulauf 1 in 4 h und parallel dazu Zulauf 2 in 7 h zudosiert. 1 h nach Ende von Zulauf 1 wurde Zulauf 3 zugegeben und anschließend Zulauf 4 in 1 h zudosiert. Es wurde noch 1 h bei 70°C nachgerührt. Die erhaltene Dispersion wies einen Feststoffgehalt von 36,0 Gew.-% und einen pH-Wert von 3,0 auf. Der K-Wert des Polymeren betrug 172.

Die Herstellung der Emulsionspolymerisate E bis H erfolgte in entsprechender Weise (Zusammensetzung s. Tabelle 2).

Emulsionspolymerisat I:

In einem 200 l fassenden heizbaren und mit Dosiereinrichtungen versehenen Rührkessel wurden in 25 kg Wasser 51 g Natriumpyrophosphat und 51 g Natriumpersulfat gelöst. Als Zulaufmischung 1 diente eine Emulsion, bestehend aus 36 kg Wasser, 564 g eines Natriumalkylsulfonates mit einer mittleren Kettenlänge von 15 Kohlenstoffatomen, 19,13 kg Styrol und 6,37 kg Acrylnitril. Zulauf 2 bestand aus 51 g Natriumpyrophosphat und 51 g Natriumpersulfat in 1,45 kg Wasser. Als Zulauf 3 diente eine Mischung von 15,3 kg Styrol, 5,1 kg Acrylnitril und 5,1 kg Butylacrylat.

Zur Vorlage wurden 4,5 l von Zulauf 1 zugegeben und unter Rühren auf 70°C aufgeheizt. Nach Erreichen der Temperatur wurde Zulauf 1 in 2,5 h zudosiert, danach noch 1,5 h gerührt. Dann wurde Zulauf 2 zugegeben und anschließend Zulauf 3 in 2,5 h zudosiert. Nach Ende von Zulauf 3 wurden 20 g Natriumpersulfat in 200 g Wasser zugefügrt und weitere 2 h bei 70°C gerührt.

Die erhaltene Dispersion wies einen Feststoffgehalt von 44,3 Gew.-% und einen pH-Wert von 8,6 auf. Der K-Wert des Polymeren betrug 119.

3. Gewinnung der pulerförmigen Emulsionspolymerisate aus den Emulsionen

Die Emulsionspolymerisate A bis H und a wurden durch Gefrierfällung aus den Emulsionen in Pulerform gewonnen, getrocknet und mit einer Messermühle auf eine Partikelgröße von ca. 100 $\mu$m gemahlen.

Das Emulsionspolymerisat I wurde durch Sprühtrocknung in ein Pulver mit einer mittleren Korngröße von etwa 120 $\mu$m überführt.

4. Prüfung des Verarbeitungsverhaltens der Polyvinylchloridharzmassen

In einem Heißmischer wurde zunächst eine Grundmischung hergestellt aus 100 Gew.-Teilen eines Suspensions-Polyvinylchlorid (K-Wert 68)
1 Gew.-Teil tribasisches Bleisulfat
0,3 Gew.-Teile Bleistearat
0,6 Gew.-Teile $C_{16}/C_{18}$ Fettalkohol und
0,1 Gew.-Teile Calciumstearat.

Die Prüfung des Verarbeitungsverhaltens erfolgte dann in einem Brabender-Plasticorder mit Walzenkneter (Typ W 30 H) mit einem Knetkammervolumen von 30 cm$^3$.

Es wurden jeweils 31 g Mischung eingesetzt, die im Falle von 2 Gew.-% Zusatz des Emulsionspolymerisats durch Untermischen von 0,6 g Copolymer in 30,4 g Grundmischung, im Falle von 5 Gew.-% Zusatz durch Untermischen von 1,5 g Copolymer in 29,5 g Grundmischung hergestellt wurden.

Geprüft wurde das Verarbeitungsverhalten bei 170°C und einer Drehzahl von 40 Upm der rechtsdrehenden Schaufel. Das Drehzahlverhältnis der links- und rechtsdrehenden Kneterschaufeln betrug 1,5 : 1.

Mit Hilfe eines Schreibers wurde der Verlauf des Drehmomentes während der Versuche aufgezeichnet und aus den Kurven die Gelierzeiten und die Plastifizierzeiten, welche als Minimum bzw. Maximum der Kurve definiert sind, entnommen (s. Tabelle 3).

Tabelle 1

| Zusammensetzung der einstufigen Emulsionspolymerisate in Gew.-% und K-Wert | | | | | |
|---|---|---|---|---|---|
| Emulsionspolymerisate | Styrol | ACN | EHA | n-BA | K-Wert |
| A | 60 | 20 | 20 | - | 80 |
| B | 67,5 | 22,5 | - | 10 | 93 |
| C | 63,75 | 21,25 | 15 | - | 104 |
| a (Vergleich) | 75 | 25 | - | - | 117 |
| Abkürzungen:<br>ACN: Acrylnitril<br>EHA: 2-Ethylhexylacrylat<br>n-BA: n-Butylacrylat | | | | | |

Tabelle 2

Zusammensetzung der zweistufigen Emulsionspolymerisate in Gew.-% und K-Wert

| Emulsionspolymerisat | 1. Stufe | Styrol | ACN | 2. Stufe | Styrol | ACN | n-BA | K-Wert |
|---|---|---|---|---|---|---|---|---|
| D | 90 | 75 | 25 | 10 | 60 | 20 | 20 | 172 |
| E | 80 | 75 | 25 | 20 | 60 | 20 | 20 | 150 |
| F | 70 | 75 | 25 | 30 | 60 | 20 | 20 | 105 |
| G | 60 | 75 | 25 | 40 | 60 | 20 | 20 | 157 |
| H | 50 | 75 | 25 | 50 | 60 | 20 | 20 | 160 |
| I | 50 | 75 | 25 | 50 | 60 | 20 | 20 | 119 |

Tabelle 3

| Gelier- und Plastifizierzeiten der Polyvinylchloridharzmassen | | | |
|---|---|---|---|
| Emulsionspolymerisat | Zusatzmenge [Gew.-%] | Geliermenge [sec] | Plastifizierzeit [sec] |
| A | 2 | 51 | 138 |
| A | 5 | 24 | 63 |
| B | 2 | 51 | 207 |
| B | 5 | 24 | 81 |
| C | 2 | 60 | 198 |
| C | 5 | 21 | 78 |
| D | 2 | 42 | 180 |
| D | 5 | 30 | 84 |
| E | 2 | 66 | 270 |
| E | 5 | 42 | 126 |
| F | 2 | 51 | 174 |
| F | 5 | 33 | 78 |
| G | 2 | 66 | 180 |
| G | 5 | 30 | 66 |
| H | 2 | 42 | 132 |
| H | 5 | 18 | 72 |
| I | 2 | 60 | 192 |
| I | 5 | 18 | 60 |
| a (Vergleich) | 2 | 81 | 318 |
| a (Vergleich) | 5 | 30 | 126 |
| ohne | - | 84 | 564 |

**Patentansprüche**

1. Polyvinylchloridharzmassen, enthaltend 0,1 bis 20 Gew.-%, bezogen auf die Menge des Polyvinylchlorids, eines Emulsionspolymerisats aus 40 bis 95 Gew.-% Styrol,
4,5 bis 59,5 Gew.-% Acrylnitril,
0,5 bis 30 Gew.-% eines $C_1$-$C_{18}$-Alkylacrylats und
0 bis 30 Gew.-% weiteren Comonomeren.

2. Polyvinylchloridharzmassen nach Anspruch 1, wobei das Emulsionspolymerisat aus mehreren Stufen aufgebaut ist und in der äußeren Hülle des Emulsionspolymerisats, deren Gewichtsanteil 5 bis 60 % des gesamten Emulsionspolymerisats beträgt, mindestens 60 Gew.-% der Gesamtmenge des $C_1$-$C_{18}$-Alkylacrylats enthalten sind.

3. Verfahren zur Verbesserung der Verarbeitbarkeit von Polyvinylchloridharzmassen zu Formteilen oder Granulaten, dadurch gekennzeichnet, daß den Polyvinylchloridharzmassen vor oder während der Verarbeitung als Verarbeitungshilfsmittel 0,1 bis 20 Gew.-%, bezogen auf die Menge des Polyvinylchlorids eines Emulsionspolymerisats aus 40 bis 95 Gew.-% Styrol,
4,5 bis 59,5 Gew.-% Acrylnitril,
0,5 bis 30 Gew.-% eines $C_1$-$C_{18}$-Alkylacrylats und
0 bis 30 Gew.-% weiteren Comonomeren zugesetzt werden.

4. Formteile aus Polyvinylchloridharzmassen gemäß Anspruch 1.

**Patentanspruch für folgenden Vertragsstaat : ES**

1. Verfahren zur Verbesserung der Verarbeitbarkeit von Polyvinylchloridharzmassen zu Formteilen oder Granulaten, dadurch gekennzeichnet, daß den Polyvinylchloridharzmassen vor oder während der Verarbeitung als Verarbeitungshilfsmittel 0,1 bis 20 Gew.-%, bezogen auf die Menge des Polyvinylchlorids eines Emulsionspolymerisats aus 40 bis 95 Gew.-% Styrol,

4,5 bis 59,5 Gew.-% Acrylnitril,
0,5 bis 30 Gew.-% eines $C_1$-$C_{18}$-Alkylacrylats und
0 bis 30 Gew.-% weiteren Comonomeren zugesetzt werden.